# EUROPEAN PATENT APPLICATION

(11) **EP 1 383 321 A1**
(43) Date of publication of application: **21.01.2004**
(21) Application number: 02707202.4
(22) Date of filing: 28.03.2002
(51) Int. Cl.: H04N 5/92

(54) **AV DATA RECORDING/REPRODUCING APPARATUS AND METHOD AND RECORDING MEDIUM ON WHICH DATA IS RECORDED BY THE AV DATA RECORIDNG/REPRODUCING APPARATUS OR METHOD**

(30) Priority: 29.03.2001 JP 2001096560
(71) Applicant: Matsushita Electric Industrial Co., Ltd., Kadoma-shi, Osaka 571-8501 (JP)
(72) Inventor: ITO, Masanori, Moriguchi-shi, Osaka 570-0096 (JP)
(74) Representative: Schorr, Frank, Dr.
(86) International application number: PCT/JP2002/003035
(87) International publication number: WO 2002/080542

(57) **Abstract**

An AV data recording/reproducing apparatus and method capable of easily creating an MPEG transport stream for special reproduction. There are provided a recording block for recording video data as an MPEG data containing a PES header on a recording medium and a special reproduction block for reproducing the MEPG data by modifying the reproduction timing. The PES heard has a stuffing data region as an empty data region. By using the stuffing data region, the special reproduction block inserts information for controlling the modified reproduction timing into the PES header without changing the PES header.

## Description

### Field of the Invention

The present invention relates to an AV data recording/reproducing apparatus and method in which video data and audio data are compressed and recorded on a recording medium such as an optical disk in real time, and then a special reproduction is carried out via a 1394 interface.

### Description of Related Art

An example of a method for compressing video data at a low bit rate includes a transport stream defined by the Moving Picture Experts Group (MPEG) 2 standards (ISO / IEC 13818-1).

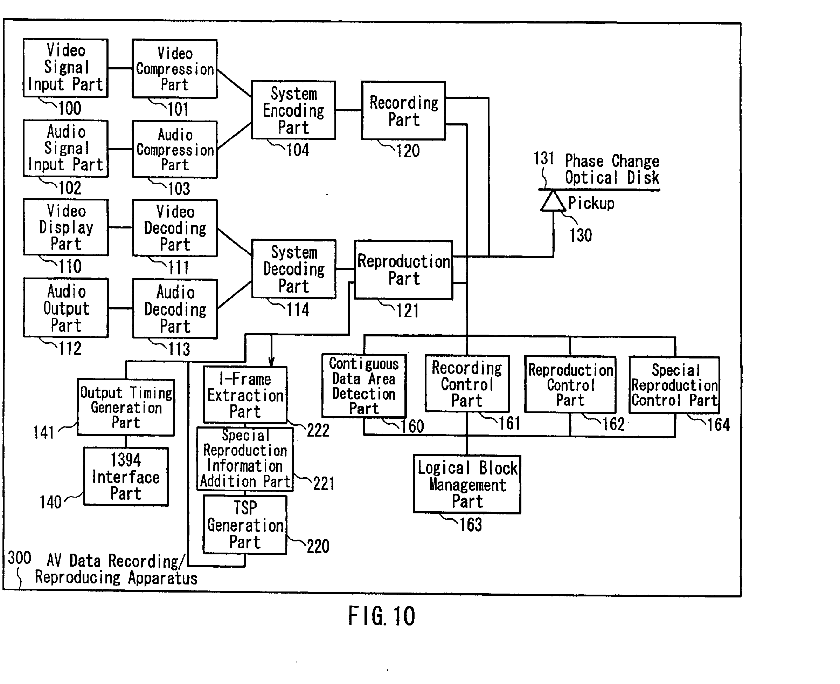

On the other hand, as video recording media instead of a magnetic tape, much attention has been paid to optical disks such as DVD-RAM, MO (magneto-optical disk), and the like. Figure 10 is a block diagram showing a configuration of a conventional AV data recording/reproducing apparatus for video using a phase change optical disk.

In Figure 10, signals input from a video signal input part 100 and an audio signal input part 102 are compressed by a video compression part 101 and an audio compression part 103, respectively, and a transport stream is produced in a system encoding part 230 and written in a phase change optical disk 131 via a recording part 120 and a pickup 130.

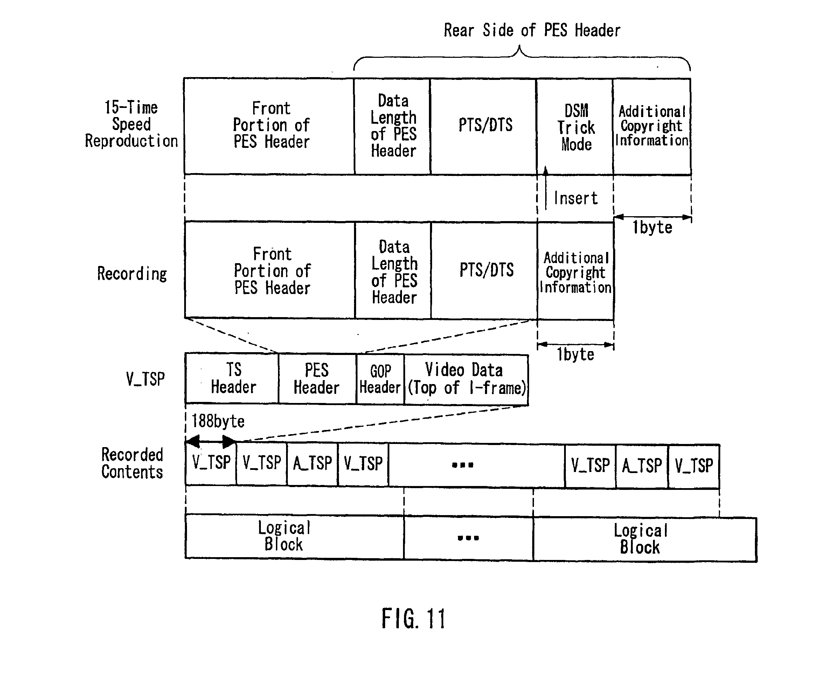

Furthermore, Figure 11 shows a recording format in the case where video is recorded on the phase change optical disk 131 in real time and a reproduction format when 15-time speed reproduction is carried out. In Figure 11, the phase change optical disk 131 includes 2-Kbyte sectors, and 16 of the sectors are handled as one logical block. Every logical block is provided with an error correction sign and recorded in the phase change optical disk.

Furthermore, physically contiguous logical blocks of 11 seconds or more on the maximum recording rate basis are secured as one contiguous data area, and video data are recorded on this area sequentially. A transport packet constituting video data includes two kinds of transport packets, that is, a video transport packet (V_TSP) in which video data are stored and an audio transport packet (A_TSP) in which audio data are stored. The length of each transport packet is 188 bytes. Furthermore, the V_TSP includes a transport packet header, a PES header (if necessary) and video data. The A_TSP includes a transport packet header, a PES header (if necessary) and audio data. The V_TSP and A_TSP are identified by a PID (Packet ID) in the transport packet header (TS header). The V_TSP is identified as PID="0x0020," and the A_TSP is identified as PID="0x0021." The video data includes a video frame and an audio frame. The video frame and each audio frame are provided with a PES header frame by frame.

Herein, a recording control part 161 controls the recording part 120. Furthermore, based on the instruction of the recording control part 161, a contiguous data area detection part 160 detects physically contiguous empty areas by examining the state of using sectors managed in a logical block control part 163.

The recording part 120 starts recording of video data from the position of the logical block number designated by the recording control part 161. At this time, in the recording part 120, one video data are divided into the unit of 32-Kbytes, and the 32-Kbyte unit to which error correction remarks are added are recorded as one logical block on the phase change optical disk 131.

The contiguous data area detection part 160 detects a next contiguous data area again at the time when the remaining of one contiguous data area is less than 3 seconds on the maximum recording rate basis. Then, when one contiguous data area is full, data are written in the following contiguous data area.

Furthermore, a data size of video data per unit time changes in the range of the maximum recording rate or less when video data have a variable bit rate. When the video data have a fixed bit rate, the data size per unit time of the video data is substantially constant.

Furthermore, when recorded contents are reproduced, a transport stream is taken out via the pickup 130 and the reproduction part 121, divided into a video signal and an audio signal at a system decoding part 37, and then output to a video display part 110 and an audio output part 112 via a video decoding part 111 and an audio decoding part 113, respectively.

At this time, a reproduction part 121 carries out reading of data from the phase change optical disk and reproduction of the read data (that is, supplying data to a system decoding part 307) simultaneously. At this time, the speed of reading data is set to be higher than the speed of reproducing data so as to control to prevent data to be reproduced from being depleted.

Therefore, if reading of contiguous data and reproduction of contiguous data are continued, it is possible to secure an extra amount of data to be reproduced by an amount corresponding to the difference between the speed for reproducing data and the speed for reading data. Such data that can be secured as an extra amount is used as reproduction data until the reading of data is finished by jump of a pickup, thus realizing the continuous reproduction.

Specifically, when the speed of reading data is 11 Mbps, the speed of reproducing data is 8 Mbps and the maximum moving time of the pickup is 3 seconds, 24 Mbits of extra data are necessary as extra reproduction data. In order to secure such extra data, continuous reading for 8 seconds becomes necessary. That is, it is necessary to carry out the continuous reading for a time calculated by dividing 24 Mbits by the difference between the speed for reading data (11 Mbps) and the speed for outputting data (8 Mbps).

Therefore, during the continuous reading for 8 seconds, 88 Mbits, that is, 11 seconds, on the maximum recording rate basis, of output data are read. Thus, by securing 11 seconds or more of contiguous data area, the continuous reproduction of data can be secured. Note here that the maximum reading speed is set to the same as the maximum recording speed (recording rate).

On the other hand, when the recorded transport stream is output to the outside in an Isochronous transferring mode via an IEEE 1394 Interface part 140, as to the transport stream taken out via the reproduction part 121 is submitted to the 1394 interface part 140 in accordance with the sending timing calculated at the output timing generation part 141.

Specifically, the output timing generation part 141 generates timing information so that the sending timing of each transport packet is in conformity with a decoder model (Transport Stream system target decoder) of the MPEG standards. Then, based on the timing information, each transport packet is submitted to the 1394 interface part 140.

Then, the 1394 interface part 140 sends each transport packet so that the time interval between packets when receiving the transport packets matches the interval for sending packets to the 1394 transmission path. Note here that the decoder model of the MPEG standards is determined to send transport packets so that the buffer memory for receiving transport packets at the side of receiving transport packet does not over-flow or under-flow.

Furthermore, at the same time, in the output timing generation part 141, in accordance with the sending timing, the replacement of time information (PCR: Program Clock Reference) in the TS header and the replacement of PTS (presentation time stamp) / DTS (decoding time stamp) are also carried out.

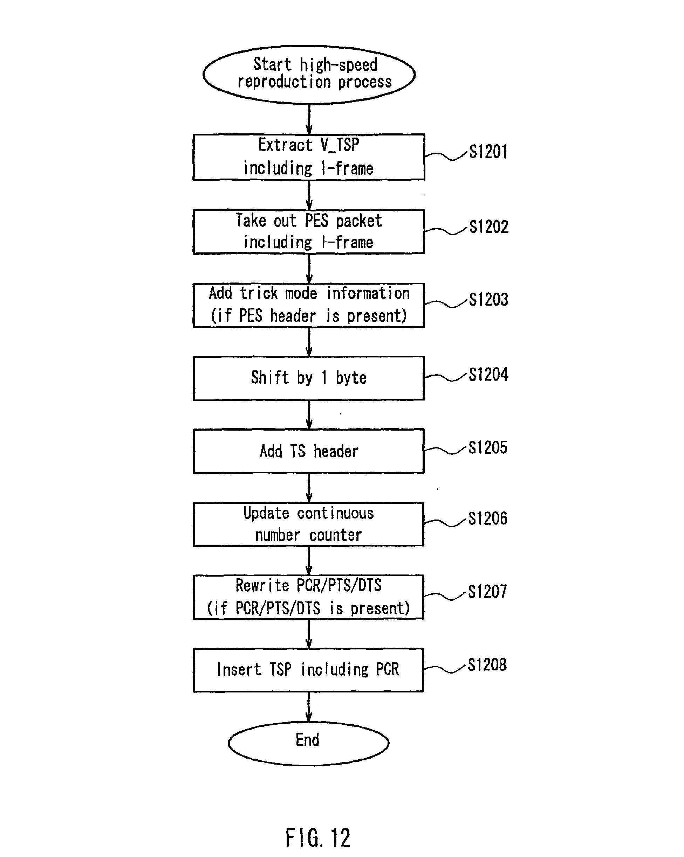

Furthermore, when a video stream with 15-time speed is output via the 1394 interface part 140, only an I-frame of the transport stream read by the reproduction part 121 is output. Figure 12 shows a process procedure at that time. In Figure 12, first of all, a transport packet including the I-frame is extracted in the I-frame extraction part 222 (step S1201), and further a PES packet portion is taken out separately (step S1202).

Next, in a special reproduction information addition part 221, DSM trick mode information (1 byte) is inserted into a PES header in a V_TSP including a top of one I-frame (step S1203).

Furthermore, a video data portion in all the V_TSPs including the following I-frame (a portion excluding the TS header in the V_TSP) is shifted backward by an amount of 1 byte (step S1204). This shift is required for all the V_TSPs including the top of one I-frame (it is also necessary to increase one V_TSP in the V_TSP including the data at the end of the I-frame). Thereafter, in the TSP generation part 220, a TS header is added again (step S1205), further the continuous number counter in all the TS headers are updated so that the continuous numbers in all the TS headers are continued (step S1206), and output to the outside instrument via the output timing generation part 141 and the 1394 interface part 140. The output timing generation part 141 rewrites PCR in the transport packet header and PTS / DTS in the PES header (step S1207) and then the transport packets including PCR are inserted at intervals of 100 m seconds or less (step S1208).

In general, the I-frame is included in every 15 frames. By reproducing this I-frame at a usual frame period, the 15-time speed reproduction can be realized.

However, when only the I-frame of the recorded video signal is output via the 1394 interface part 140 and the 15-time speed reproduction is realized, the video data in all the V_TSPs including I-frames are shifted backward by one byte with respect to each V_TSP, and the TS header is added again so as to assemble the transport packet. Thus, complicated process is required.

Furthermore, when particularly, the DSM trick mode information is inserted in all the video frames, the shift amount is increased byte by byte in the unit of frame in such a manner in which, for example, the amount of shift is 2 bytes in the second frame and the shift amount is 3 bytes in the third frame. Thus, the insertion process becomes more complicated.

### Disclosure of the invention

In order to solve the above-mentioned problems, it is an object of the present invention to provide an AV data recording/reproducing apparatus and method in which when MPEG transport stream for special reproduction (15-time speed reproduction, 15-time speed reverse reproduction, slow reproduction, slow reverse reproduction, -1 time speed reproduction, etc.) is output so as to be displayed or recorded via the IEEE 1394 digital interface with respect to a D-VHS set top box (STB) or digital television (DTV), a MPEG transport stream for special reproduction is easily generated. Note here that "-1 time speed reproduction" means a display operation of reverse reproduction at the same speed as that of the usual reproduction.

In order to solve the above-mentioned problem, an AV data recording/reproducing apparatus of the present invention includes a recording part for recording video data as MPEG data including a PES (Packetized Elementary Stream) header on a recording medium; and a special reproduction part for reproducing the MPEG data by modifying a reproduction timing. The PES header includes a stuffing data area that is an empty data area. By using the stuffing data area, the special reproduction part inserts information for controlling the modified reproduction timing into the PES header without changing the size of the PES header.

With such a configuration, in the 15―time speed reproduction via the 1394 interface, after information on the special reproduction such as DSM trick mode information is added into the transport packet, it is not necessary to assemble transport packet again. Therefore, since it is sufficient to change the internal information about one transport packet for every frame, it is possible to realize special reproduction such as 15-time speed reproduction, easily.

Next, in order to achieve the above-mentioned object, the invention of the present invention includes a special reproduction part for reproducing MPEG data, including a PES (Packetized Elementary Stream) header, recorded on a recording medium by modifying a reproduction timing. The special reproduction part inserts information for controlling one of the modified reproduction timings into the PES header, and the MPEG data of the data size of the information for controlling the reproduction timing are stored in another transport packet that is newly inserted.

With such a configuration, by adding one new V_TSP for every frame, reconfiguration of other transport packet is not generated. Therefore, special reproduction such as 15-time speed reproduction can easily be realized.

Next, in order to achieve the above-mentioned problem, an AV data recording/reproducing apparatus of the present invention includes a recording part for recording audio data and/or video data as MPEG data on a recording medium; and a conversion part for outputting the MPEG data by adding predetermined information to the MPEG data. The MPEG data includes a predetermined data area. By using the data area, the conversion part inserts the predetermined information into the MPEG data without changing the data size of the MPEG data.

Furthermore, the AV data recording/reproducing apparatus of the present invention includes: a recording part for recording audio data and/or video data as MPEG data on a recording medium; and a special reproduction part for reproducing the MPEG data by modifying a reproduction timing. The MPEG data include predetermined data area. By using the data area, the special reproduction part inserts information on the modified reproduction timing into the MPEG data without changing the data size of the MPEG data.

With such a configuration, even if predetermined information such as DSM trick mode information etc. is added into the transport packet, since it is not necessary to reconstruct the video data all over the transport, the special reproduction such as 15-time speed reproduction can easily be realized.

Furthermore, in the AV data recording/reproducing apparatus of the present invention, it is preferable that the MPEG data include a PES header and the data area is secured in the PES header. It is more preferable that the PES header is added for every picture of video data.

Furthermore, in the AV data recording/reproducing apparatus of the present invention, it is preferable that in the MPEG data, the data area is included just in front of a sequence header. It is more preferable that the MPEG data include a plurality of contiguous packets and the data area is included in a packet located a predetermined number of packets in front with respect to the packets including the sequence header.

Next, in order to achieve the above-mentioned object, an AV data recording apparatus of the present invention includes a recording part for recording audio data and/or video data as MPEG data on a recording medium. When the MPEG data are reproduced by modifying a reproduction timing, a predetermined data area storing information on the modification of the reproduction timing is included.

With such a configuration, even if predetermined information such as DSM trick mode information etc. is added into the transport packet, since is it not necessary to reconstruct the video data all over the transport, the special reproduction such as 15-time speed reproduction can easily be realized.

Next, in order to achieve the above-mentioned object, an AV data reproducing apparatus of the present invention includes a special reproduction part for reproducing MPEG data of audio data and video data by modifying a reproduction timing. The MPEG data include a predetermined data area. By using the data area, the special reproduction part inserts information on the modified reproduction timing into the MPEG data without changing the data size of the MPEG data.

With such a configuration, even if predetermined information such as DSM trick mode information etc. is added into the transport packet, since is it not necessary to reconstruct the video data all over the transport, the special reproduction such as 15-time speed reproduction can easily be realized.

Next, in order to achieve the above-mentioned object, an AV data reproducing apparatus of the present invention includes a special reproduction part for reproducing MPEG data of audio data and/or video data, which include a plurality of contiguous packets, recorded on a recording medium by modifying a reproduction timing. The special reproduction part inserts information on one of the modified reproduction timings into a predetermined packet, and the MPEG data of the data size of the information for controlling the reproduction timing are stored in another transport packet that is newly inserted.

With such a configuration, by adding one new V_TSP for every frame, other transport packets are not reconstructed. Thus, the special reproduction such as 15-time speed reproduction can easily be realized.

Furthermore, in the AV data reproducing apparatus of the present invention, it is preferable that the packet has a fixed data length including a transport packet, and the information on the reproduction timing is stored in the PES header included in the transport packet.

Furthermore, in the AV data reproducing apparatus of the present invention, it is preferable that the PES header is added for every picture of video data, or that the PES header is added for every audio frame of audio data.

Next, in order to achieve the above-mentioned object, the method for recording and reproducing AV data of the present invention includes: recording video data as MPEG data including a PES header on a recording medium; and reproducing the MPEG data by modifying a reproduction timing. The PES header includes a stuffing data area that is an empty data area. In reproducing, by using the stuffing data area, information for controlling the modified reproduction timing is inserted into the PES header without changing the size of the PES header.

With such a configuration, in the 15-time speed reproduction via the 1394 interface, after information on the special reproduction such as DSM trick mode information is added into the transport packet, it is not necessary to re-assemble transport packets. Therefore, since it is sufficient to change the internal information about one transport packet for every frame, it is possible to realize the special reproduction such as 15-time speed reproduction, easily.

Next, in order to achieve the above-mentioned object, the method for recording and reproducing AV data of the present invention includes: reproducing the MPEG data including a PES header recorded in a recording medium by modifying a reproduction timing. In reproduction, information for controlling one of the modified reproduction timings is inserted into the PES header, and the MPEG data of the data size of the information for controlling the reproduction timing is stored in another transport packet that is newly inserted.

With such a configuration, by adding one new V_TSP for every frame, other transport packets are not reconstructed. Thus, the special reproduction such as 15-time speed reproduction can easily be realized.

Next, in order to achieve the above-mentioned object, the method for recording and reproducing AV data of the present invention includes: recording audio data and/or video data as MPEG data on a recording medium; and outputting the MPEG data by adding predetermined information to the MPEG data. The MPEG data includes a predetermined data area. In outputting the MPEG data by adding predetermined information, by using the data area, predetermined information is inserted into the MPEG data without changing the size of the MPEG data.

Furthermore, the method for recording and reproducing AV data of the present invention includes: recording audio data and/or video data as MPEG data on a recording medium; and reproducing the MPEG data by modifying the reproduction timing. The MPEG data include a predetermined data area. In reproducing, by using the data area, information on the modified reproduction timing is inserted into the MPEG data without changing the data size of the MPEG data.

With such a configuration, even if predetermined information such as DSM trick mode information etc. is added into the transport packet, since it is not necessary to reconstruct the video data all over the transport, the special reproduction such as 15-time speed reproduction can easily be realized.

Next, in order to achieve the above-mentioned object, the method for recording AV data of the present invention includes: recording audio data and/or video data as MPEG data on a recording medium. In reproducing the MPEG data by modifying a reproduction timing, a predetermined data area for storing information on the modification of the reproduction timing.

With such a configuration, even if predetermined information such as DSM trick mode information etc. is added into the transport packet, since it is not necessary to reconstruct the video data all over the transport, the special reproduction such as 15-time speed reproduction can easily be realized.

Next, in order to achieve the above-mentioned object, the method for reproducing AV data of the present invention includes: reproducing audio data and/or video data as MPEG data by modifying the reproduction timing. The MPEG data include a predetermined data area; and in reproduction, by using the predetermined data area, information on the modified reproduction timing is inserted into the MPEG data without changing the data size of the MPEG data.

With such a configuration, even if predetermined information such as DSM trick mode information etc. is added into the transport packet, since it is not necessary to reconstruct the video data all over the transport, the special reproduction such as 15-time speed reproduction can easily be realized.

Next, in order to achieve the above-mentioned object, the method for reproducing AV data, the method including: reproducing MPEG data including audio data and/or video data, which include a plurality of contiguous packets, recorded on a recording medium. In reproduction, information on one of the modified reproduction timings is inserted into a predetermined packet, and the MPEG data of the data size of the information for controlling the reproduction timing are stored in another transport packet that is newly inserted.

With such a configuration, by adding one new V_TSP for every frame, other transport packets are not reconstructed. Thus, the special reproduction such as 15-time speed reproduction can easily be realized.

Next, in order to achieve the above-mentioned object, a data structure body of the present invention includes MPEG data of audio data and/or video data, wherein the MPEG data include in advance a predetermined data area that can be used for storing information on the modification of a reproduction timing.

Furthermore, in the data structure body of the present invention, it is preferable that the data area is secured in the PES header and that the PES header is added for every picture of video data. Furthermore, it is preferable that the MPEG data include packets; and the data area is included in a packet located a predetermined number of packets in front with respect to a packet including a sequence header.

Next, in order to achieve the above-mentioned object, the data structure body of the present invention includes audio data and/or video data as MPEG data, wherein the MPEG data have a PES header in the unit of a picture of the video data and the PES header includes a stuffing byte.

Furthermore, a recording medium such as a disk or memory card according to the present invention is recorded by the above-mentioned apparatus and method for recording and reproducing AV data.

### Brief description of drawing

Figure 1 is a block diagram showing a configuration of an AV data recording/reproducing apparatus according to a first embodiment of the present invention.
Figure 2 is a flowchart showing a process of a special reproduction control part in the AV data recording/reproducing apparatus according to the first embodiment of the present invention.
Figure 3 is a view showing a recording format and a special reproduction format in the AV data recording/reproducing apparatus according to the first embodiment of the present invention.
Figure 4 is a view showing a configuration of data of a transport stream at the time of high speed reproduction in which data are output from the AV data recording/reproducing apparatus according to the first embodiment of the present invention.
Figure 5 is a view showing a recording format and a special reproduction format in an AV data recording/reproducing apparatus according to a second embodiment of the present invention.
Figure 6 is a flowchart showing a process of a special reproduction control part in the AV data recording/reproducing apparatus according to the second embodiment of the present invention.
Figure 7 is a view showing a recording format and a special reproduction format in an AV data recording/reproducing apparatus according to a third embodiment of the present invention.
Figure 8 is a block diagram showing a configuration of the AV data recording/reproducing apparatus according to a third embodiment of the present invention.
Figure 9 is a view showing a data structure of the transport stream at the time of slow reproduction when data are output from the AV data recording/reproducing apparatus according to the first embodiment of the present invention.
Figure 10 is a view showing a configuration of a conventional AV data recording/reproducing apparatus.
Figure 11 is a view showing a recording format and a special reproduction format in a conventional AV data recording/reproducing apparatus.
Figure 12 is a flowchart showing a process at the time of high-speed reproduction by a conventional AV data recording/reproducing apparatus.

### Best mode for carrying out the invention

### (First Embodiment)

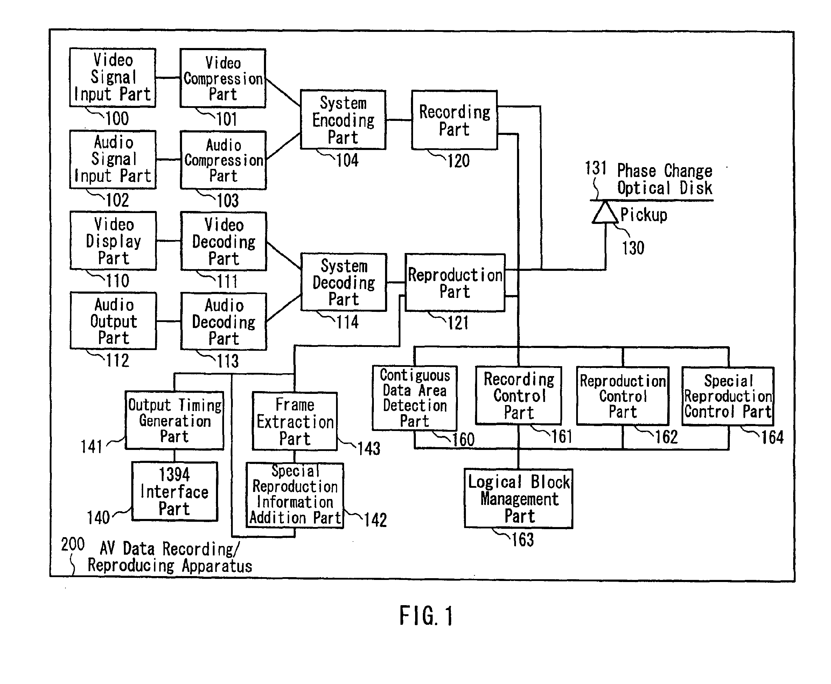

Hereinafter, an AV data recording/reproducing apparatus of a first embodiment of the present invention will be explained with reference to the drawings. Figure 1 is a block diagram showing a configuration of the AV data recording/reproducing apparatus according to the first embodiment of the present invention.

In Figure 1, signals input from a video signal input part 100 and an audio signal input part 102 are compressed by a video compression part 101 and an audio compression part 103, respectively, and a transport stream is generated in a system encoding part 104 and written in a phase change optical disk 131 via a recording part 120 and a pickup 130.

Furthermore, when recorded contents are reproduced, a transport stream is taken out via the pickup 130 and a reproduction part 121, divided into a video signal and an audio signal at a system decoding part 114, and then output to a video display part 110 and an audio output part 112 via a video decoding part 111 and an audio decoding part 113, respectively.

On the other hand, when the recorded video signal is output to the outside via a 1394 Interface part 140, the transport stream taken out via the reproduction part 121 is submitted to the 1394 interface part 140 in accordance with a sending timing calculated in an output timing generation part 141.

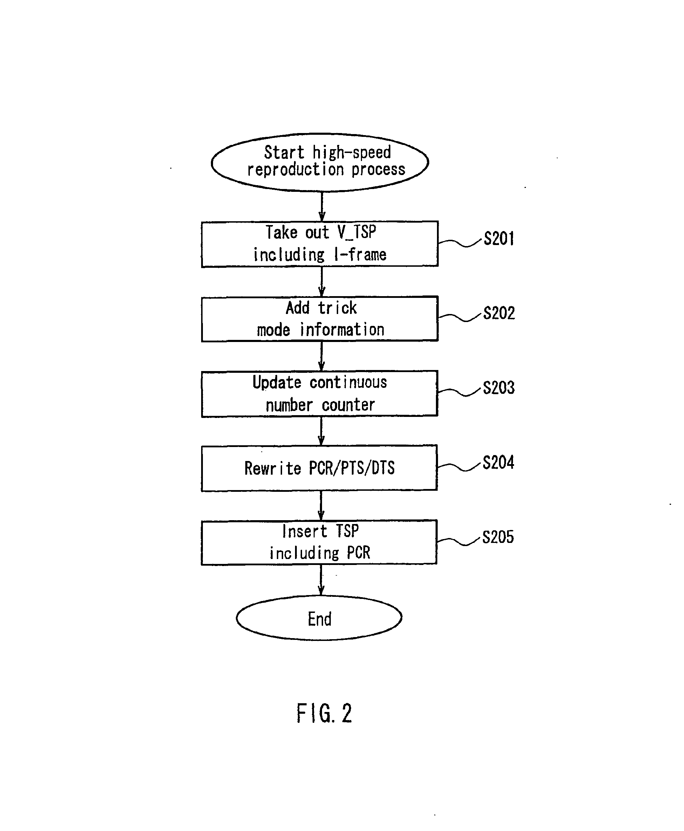

Furthermore, when only I-frame of the recorded video signal is output via the 1394 interface part 140 and 15-time speed reproduction is realized, in a special reproduction control part 164, process as shown in Figure 2 is carried out. Figure 2 is a flowchart showing a process of a special reproduction control part in the AV data recording/reproducing apparatus according to the first embodiment of the present invention.

In Figure 2, first of all, a V_TSP including the I-frame is extracted in the I-frame extraction part 143 (step S201).

Next, in a special reproduction information addition part 142, a DSM trick mode information is inserted into a PES header of a V_TSP including a top of the I-frame (step S202). Furthermore, the continuous number counter (Continuity Counter) is updated so that the numbers are continued from the top (Step S203).

Then, the transport packet is output via the output timing generation part 141 and the 1394 Interface part 140. Note here that the function of the output timing generation part 141 and the 1394 interface part 140 are the same as those in the conventional technique. The output timing generation part 141 rewrites PCR in the transport packet header and PTS / DTS in the PES header (step S204), and further the transport packets including PCR are inserted at intervals of 100 m seconds or less (step S205).

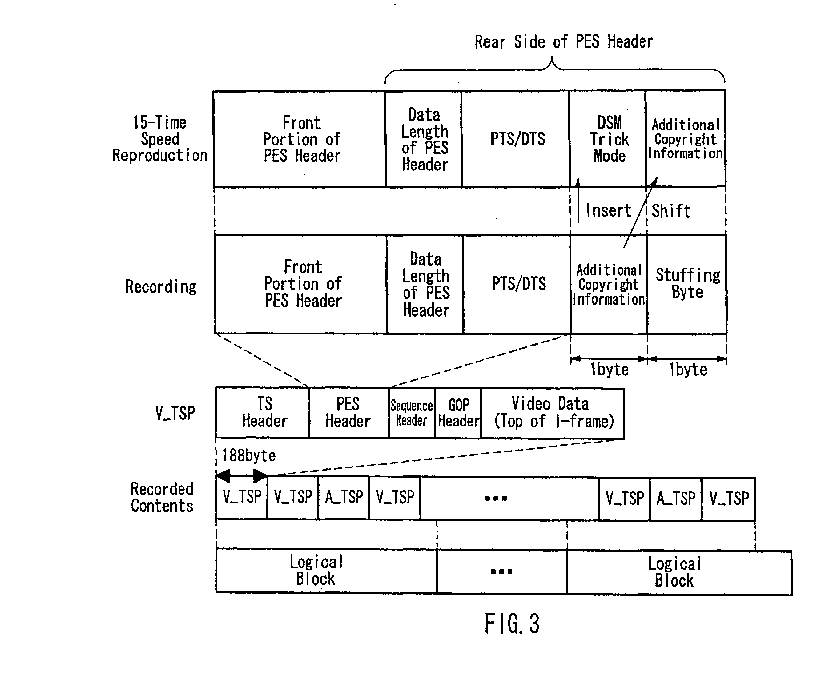

Figure 3 is a view showing a recording format when video data are recorded and a special reproduction format when 15-time speed reproduction is carried out in the AV data recording/reproducing apparatus according to the first embodiment of the present invention. In Figure 3, the role (meaning) of the logical block of the phase change optical disk 131, the contiguous data area, the V_TSP and the A_TSP are the same as those in the conventional technique. Furthermore, as in the conventional technique, the video data include video frames and audio frames and each of the video frames and each of the audio frames are provided with one PES header respectively. Furthermore, the PES packet including a frame at the top of GOP also includes a sequence header and a GOP header.

The difference between the recording format and the special reproduction format in this embodiment of the present invention and those of the conventional technique is mentioned below. Firstly, in this embodiment, 1 byte of stuffing byte as an empty area is provided in advance inside the PES header in the V_TSP. Note here that in such a stuffing byte, any values may be stored.

Second, when a 15-time speed reproduction stream is output via the 1394 interface part 140, additional copyright information (1 byte) is shifted onto the stuffing byte and DSM trick mode information is written in a 1-byte area that newly becomes an empty area because of the shift of additional copyright information (1 byte).

Herein, the value of the DSM trick mode information is represented by the following expression in conformity with the MPEG2 standards.
Trick mode control (trick_mode_control) = feed forward (000b)
Field identifier (field_id) = frame display (10b)
Intra slice refresh (intra_slice_refresh) = not used (0b)
Frequency Truncuation (frequency_truncation)
=not used (11b)
Furthermore, at this time, although not shown in the drawing, DSM_trick_mode_flag field inside the PES header is modified from '0 (zero)' to '1'.

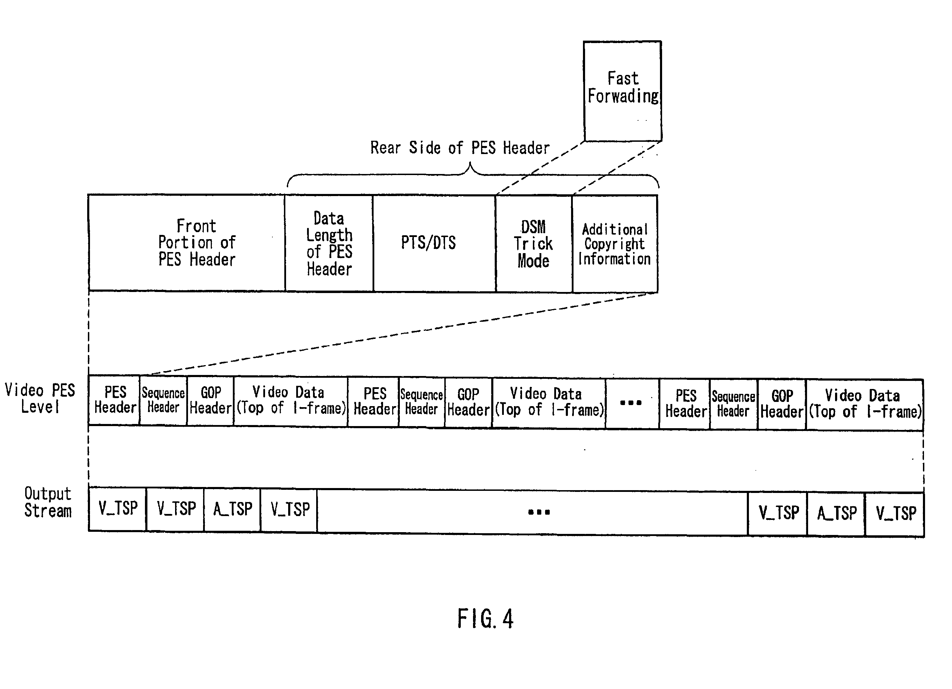

Figure 4 shows a data structure of the transport stream generated in the special reproduction information addition part 142. As shown in Figure 4, into the transport stream generated in the special reproduction information addition part 142, DSM trick mode information is inserted and a plurality of I-frames are connected.

As mentioned above, according to the first embodiment, in the 15-time speed reproduction via the 1394 interface, when DSM trick mode information is added to the transport packet, it is not necessary to shift video data by one byte all over the transport packet and to re-assemble transport packets. Therefore, since it is sufficient to change the internal information about only one transport packet to one frame, it is possible to easily realize the special reproduction such as the 15-time speed reproduction. Furthermore, the transport stream output from the 1394 interface is a stream having a data structure in conformity with the special reproduction specification of the MPEG 2 standards.

Note here that in the first embodiment, a stuffing byte is provided in the PES header in advance. However, a similar area may be provided in another form. For example, a 1-byte area may be secured in PES private data or PES extension field data. Furthermore, the 1-byte area may be secured in an adaptation filed of a transport packet header including a PES header, a transport private data field, or stuffing byte field.

Note here that in the first embodiment, the PES header is added for every video frame or every audio frame. However, the PES header may be added in a predetermined number of video frame units in the case of video and a predetermined number of audio frame units in the case of audio. Furthermore, when the video is a field picture, it may be added in the unit of a field.

Furthermore, in the first embodiment, at the time of recording, a particularly significant value is not set in the stuffing byte area. However, the value that is not used at the time of special reproduction may be set.

Furthermore, in the first embodiment of the present invention, a transport stream for special reproduction is generated from the video frame. However, the DSM trick mode information may be stored also in the audio frame. In the case where such a transport stream is reproduced, needless to say, an appropriate audio reproduction method is required in order to understand the contents of audio.

### (Second Embodiment)

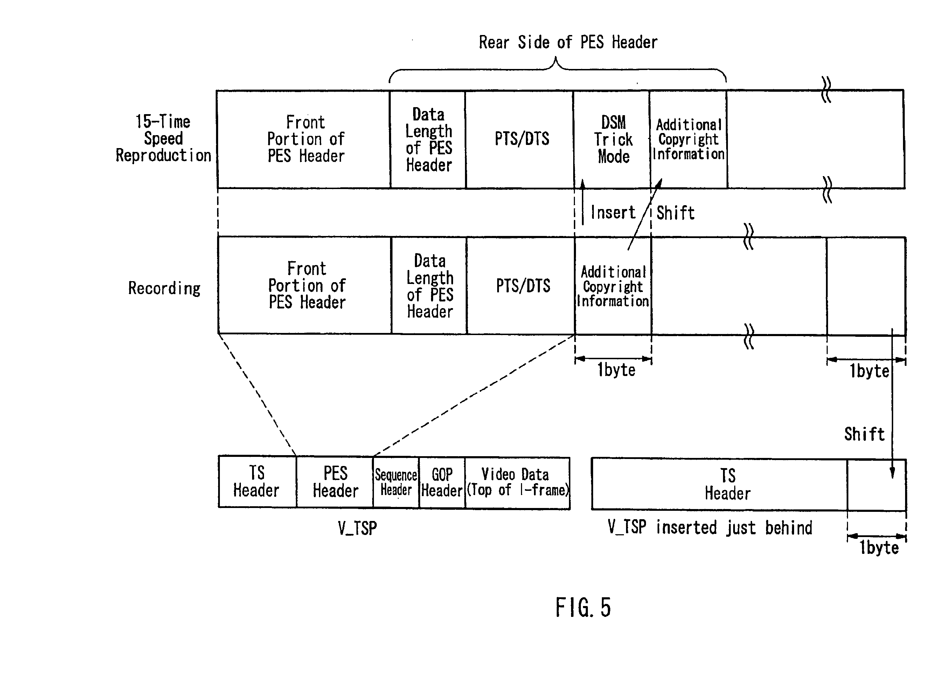

Hereinafter, an AV data recording and reproduction apparatus according to a second embodiment of the present invention will be explained with reference to the drawings. Figure 5 shows a recording format when video data are recorded and a reproduction format when 15-time speed reproduction is carried out in the AV data recording/reproducing apparatus according to the second embodiment of the present invention.

Figure 5 is different from the first embodiment in that at the time of recording, a stuffing byte as an empty area is not recorded in advance and that at the time of 15-time speed reproduction, after a DSM trick mode information is inserted, one V_TSP is inserted just behind thereof so as to absorb the video data overflown because the DSM trick mode information is inserted.

That is, since the stuffing byte is not recorded in advance, at the time of 15-time speed reproduction, if the DSM trick mode information is inserted into the PES header, the PES header area is increased by one byte. Therefore, 1-byte of data at the end of the video data recorded in the V_TSP cannot be stored. Then, after the DSM trick mode information is inserted into the PES header, one new V_TSP is inserted just behind thereof and video data overflown because the DSM trick mode information is inserted are stored in the new V_TSP, thereby enabling the continuity of data in real time reproduction to be secured.

The configuration of the AV data recording/reproducing apparatus according to the second embodiment is substantially the same as that of the first embodiment. The difference between the first embodiment and the second embodiment is in that the contents to be processed in a system encoding part 104, a special reproduction control part 164, a frame extraction part 143, and the special reproduction information addition part 142. The system encoding part 104 does not insert a stuffing byte into a PES header in advance.

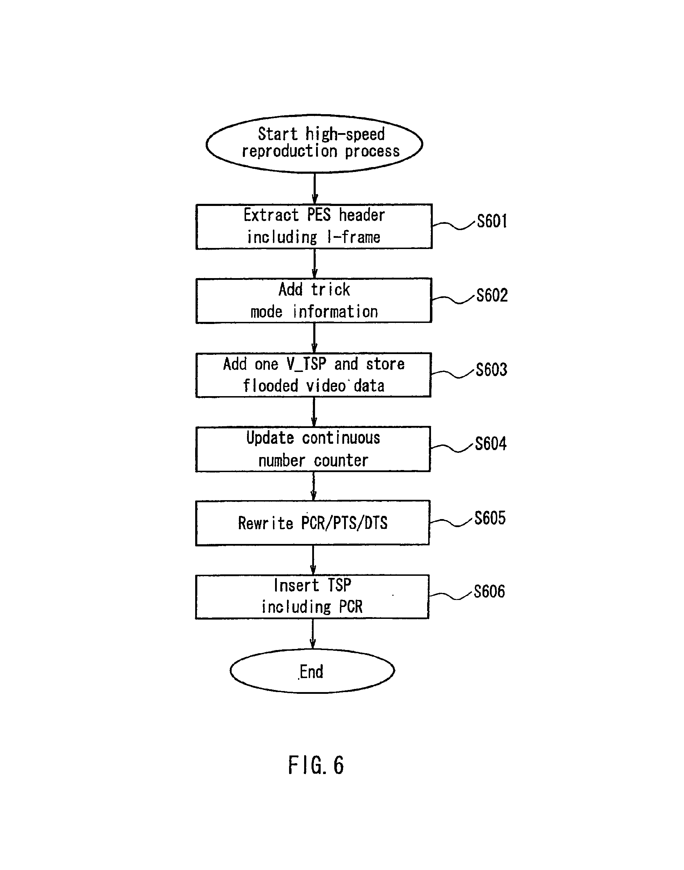

Figure 6 is a flowchart showing a process of the special reproduction control part 164 at the time of 15-time speed reproduction in the AV data recording/reproducing apparatus according to the second embodiment of the present invention. In Figure 6, firstly, the frame extraction part 143 extracts an I―frame and a V_TSP including a PES header (step S601).

Next, in the special information addition part, into the PES header, DSM trick mode information is added (step S602). Furthermore, thereafter, one V_TSP is added just behind thereof and flooded video data are stored in the added V_TSP (step S603).

Then, the continuous number counter is updated so that the values of the continuous number counter are continued for every kind of each transport packet (step S604). This is because a V_TSP is additionally inserted in the step S603 and only the I-frame is extracted, values of the continuous number counter are not discontinuous.

Next, PCR / PTS / DTS is rewritten in accordance with the sending timing (step S605) and transport packets including only PCR are inserted at intervals of 100 msec or less (step S606).

As mentioned above, according to the second embodiment, by adding one new V_TSP for every I-frame, special reproduction such as the 15-time speed reproduction can easily be realized without changing a transport packet other than the top of the frame. Furthermore, the transport stream output from the 1394 interface is a stream in accordance with the special reproduction specification of the MPEG 2 standards.

Furthermore, in the case where the transport stream of a broadcast wave is input via the 1394 interface and recorded in an optical disk while maintaining the data structure of the transport packet, there are various data structures of the PES header in which a video stream is stored. In the case where such a video stream is output by special reproduction via the 1394 interface, the second embodiment is particularly effective. This is because the process method is not dependent upon the data structure of the PES header.

Moreover, in the second embodiment, the V_TSP is inserted just behind thereof. However, the V_TSP may be inserted behind the V_TSP that is second or third from the V_TSP including a frame top. Furthermore, on the contrary, the PES header is recorded in the V_TSP that is additionally inserted and the flooded video data may be recorded in the V-TSP that included a PES header.

### (Third Embodiment)

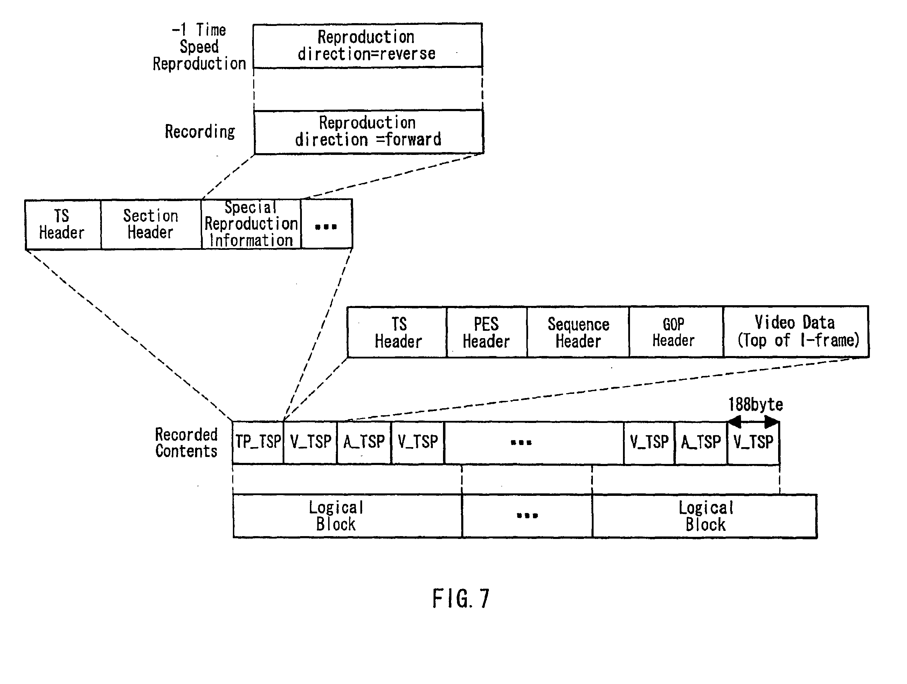

Hereinafter, an AV data recording/reproducing apparatus according to a third embodiment of the present invention will be explained with reference to drawings. Figure 7 is a view showing a recording format when video data are recorded and a reproduction format when 15-time speed reproduction is carried out in an AV data recording/reproducing apparatus according to the third embodiment of the present invention.

Figure 7 is different from the first embodiment in that a stuffing byte as an empty area at the recording time is not recorded in advance and a special―purposed transport packet (TP_TSP) used at the time of special reproduction is recorded just in front of the transport packet including a GOP header. Such a TP_TSP includes a transport packet header, a section header, and special reproduction information. At a recording time, special reproduction information in the TP_TSP is recorded by defining (reproduction direction = forward direction).

Furthermore, at the time of -1 time speed reproduction, the special reproduction information in the TP_TSP is output by defining (reproduction direction =opposite direction).

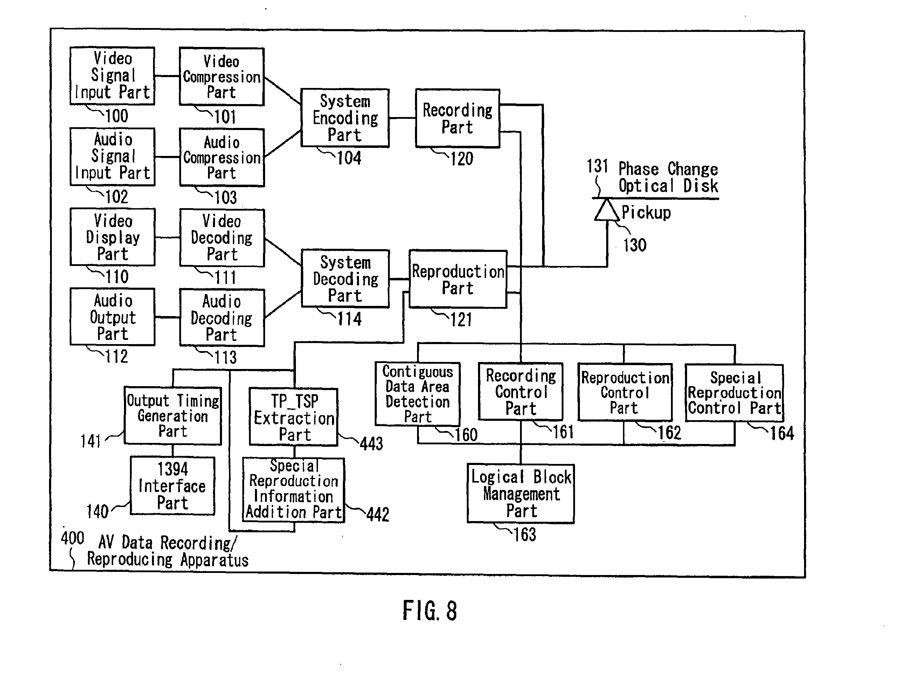

Figure 8 is a block diagram showing a configuration of an AV data recording/reproducing apparatus according to a third embodiment of the present invention. Figure 8 is different from the first embodiment in that firstly, the frame extraction part 143 is replaced by a TP_TSP extraction part 443. Furthermore, the contents to be processed by the system encoding part 404, the special reproduction control part 464 and the special reproduction information addition part 442 are different. The system encoding part 404 is different in that the TP_TSP is inserted and the special reproduction control part 464 is different in the control method at the time of special reproduction.

Specifically, at the time of -1 time speed reproduction, a pair of recorded video data of TP_TSP in which the special reproduction information is set in the reverse direction and one GOP are output in the unit of the pair from the 1394 interface in the order opposite to that at the time of recording. For example, when GOP#0, #1 and #2 are recorded in this order, GOP#2, #1 and #0 are output in this order. The STB that receives a transport stream including TP_TSP via the 1394 interface stores the transport stream inside once in the unit of GOP when the opposite direction is designated in the TP_TSP, and then frames are processed to be displayed in the order from a frame to be displayed at the last in the GOP to the frame to be displayed at the first.

According to the above-mentioned configuration, by adding the special reproduction information in the unit of GOP, -1 time speed reproduction that is not specified in the MPEG 2 standards can be realized via the 1394 interface. Furthermore, since an area to which special reproduction information is added is secured in advance, process of the special reproduction is easy.

Note here that in the third embodiment, only the case of -1 time speed reproduction using an I/P/B frame is explained. However, it is also possible to realize a slow reproduction or a slow reverse reproduction using the I/P/B frame. Furthermore, it is also possible to realize a high speed reproduction or a high speed reverse reproduction using only an I―frame or an I/P frame. In this case, it is necessary to store the kind of special reproduction, information on reproduction speed, or the like, as special reproduction information of the TP_TSP.

Furthermore, in the third embodiment, it is desirable that a sequence header is added in the unit of GOP. This is because the information of the sequence header includes information necessary to reproduce one GOP (note here that in the MPEG Standards, the sequence header is not necessary to be placed in front of the second GOP).

Note here that in the first and second embodiments, the case where 15-time speed reproduction is carried out was explained. However, the stuffing byte may be used for the special reproduction with other speed such as a fast forward reproduction, a fast rewind reproduction, a slow reproduction, and a slow reverse reproduction, etc.

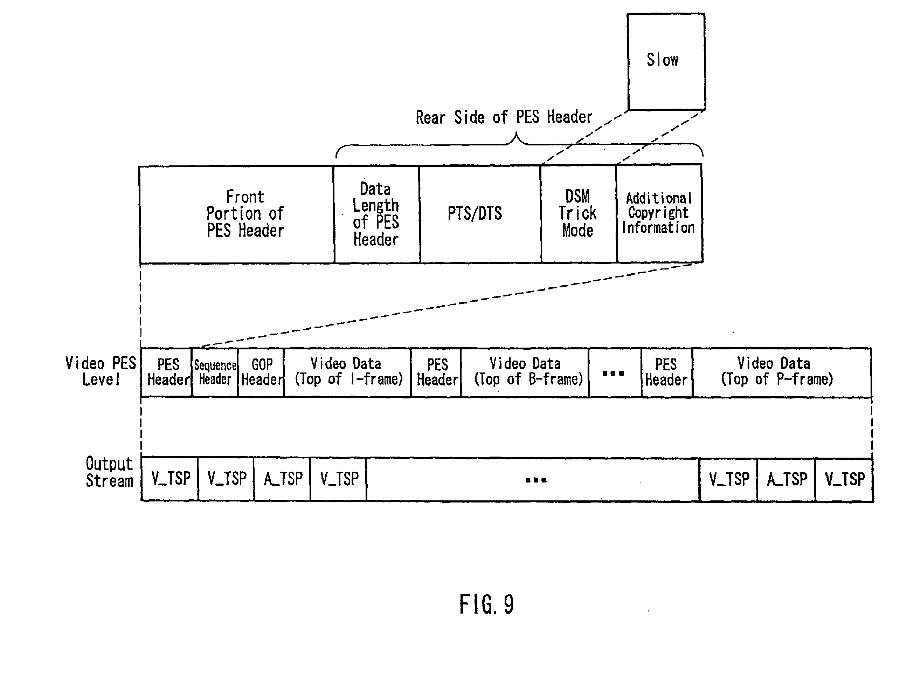

Furthermore, in the first and second embodiments, the case of high speed reproduction using an I-frame was explained. However, similarly, it is also possible to realize the special reproduction of slow reproduction and reverse slow reproduction using an I/P/B frame. Furthermore, also in the case of high speed reproduction or high speed reverse reproduction using an I/P frame, the special reproduction can be realized. As an example, a transport stream output by the 1394 interface at the time of slow reproduction is shown in Figure 9. In this case, a DSM trick mode flag is added also to the PES header storing a P/B frame similar to the case of an I-frame.

Note here that in the embodiment, recording of transport stream was explained. However, the present invention is not necessarily limited to this. A PES stream configured by PES packets having an arbitrary packet length may be recorded. However, in the case where the PES stream is recorded, PES/TS conversion is necessary when the input/output is carried out via the 1394 interface. Furthermore, the system encoder part and system decoding part need a PES stream assembly and analysis. Furthermore, program stream may be recorded.

Furthermore, in the embodiments, the case where also audio data are compressed was explained. However, the same effect can be obtained when the audio data are incorporated in a form which is not compressed.

Note here that in the embodiments, the digital interface was explained as a transmission path that is in conformity with the 1394 standards. However, the transmission path is not particularly limited insofar as synchronous transmission of MPEG data can be carried out and LAN (Local Area network) standards or USB 2.0 standards may be used.

Note here that in the embodiments, the recording medium is a phase change optical disk. However, the recording medium is not particularly limited to this and not only disk-shaped recording media such as an optical disk or hard disk, etc., for example, DVD-RAM, MO, DVD-R, DVD+R, DVD-RW, DVD+RW, CD-R, CD-RW, etc. but also recording media which do not have a disk―shape, for example, a semiconductor memory or memory card, may be employed.

Likewise, in the embodiments, a pickup is used for reading/writing head. In the case of MO, a pickup and a magnetic head are used, and in the case of a hard disk, a magnetic head is used.

Furthermore, in the embodiments, the transport stream may have a format in conformity with the digital broad cast standards using the MEPG may be used.

Furthermore, in the embodiments, the logical block is 32 Kbyte and the sector is 2 Kbytes. However, the sizes are not particularly limited insofar as the size of the logical block is an integral multiple of the sector size. For example, the size of the logical block may 16 Kbytes and the size of the sector may be 2 Kbytes. Furthermore, both sizes of the logical block and the sector may be 2 Kbytes.

Furthermore, in the embodiments, video data are in conformity with the MPEG 2 standards. However, they may be in conformity with the MEPG 1 or MEPG 4.

Furthermore, in the embodiments, the sending timing of the transport stream is determined in the output timing generation part. However, the output timing is recorded together with the transport packet at the same time of recording, and the information on this sending timing may be used at the time of 1394 output. This case can be realized, for example, by recording 4 bytes of the sending timing information just in front of the transport packet and recording in a packet format of 192 bytes in total. Furthermore, a plural pieces of timing information are stored in the transport packet for storing timing information and the corresponding transport packets may be recorded just behind the transport packet. In this case, the data size of the packet remains 188 bytes.

Note here that in the embodiments, the sending of PAT, etc. before sending the transport stream for special reproduction is not mentioned. However, it is desirable that a transport packet including PAT, a transport packet including PMT and transport packet including PCR are sent out.

Furthermore, in the first and second embodiments, the example in which 15-time speed reproduction using only I-frame was explained. However, it may be thought that the rewriting timing of frames does not strictly become 15 times and becomes, for example, about 10 times. This is because in the case of moving between I-frames, a seek operation that is not generated at the time of the usual reproduction is required generally, so that the data supply is not in time.

### Industrial Applicability

As mentioned above, according to an AV data recording/reproducing apparatus of the present invention, by connecting it to a D-VHS or set top box (STB) via an IEEE 1394 digital interface, it is possible to easily realize the special reproduction such as a fast forwarding reproduction.

## Claims

1. An AV data recording/reproducing apparatus, comprising:
a recording part for recording video data as MPEG data including a PES (Packetized Elementary Stream) header on a recording medium; and
a special reproduction part for reproducing the MPEG data by modifying a reproduction timing;
wherein the PES header comprises a stuffing data area that is an empty data area; and
by using the stuffing data area, the special reproduction part inserts information for controlling the modified reproduction timing into the PES header without changing the size of the PES header.

2. An AV data recording/reproducing apparatus, comprising:
a special reproduction part for reproducing MPEG data, including a PES (Packetized Elementary Stream) header, recorded on a recording medium by modifying a reproduction timing;
wherein the special reproduction part inserts information for controlling one of the modified reproduction timings into the PES header, and the MPEG data of the data size of the information for controlling the reproduction timing are stored in another transport packet that is newly inserted.

3. An AV data recording/reproducing apparatus, comprising:
a recording part for recording audio data and/or video data as MPEG data on a recording medium; and
a conversion part for outputting the MPEG data by adding predetermined information to the MPEG data;
wherein the MPEG data includes a predetermined data area, and
by using the data area, the conversion part inserts the predetermined information into the MPEG data without changing the data size of the MPEG data.

4. An AV data recording/reproducing apparatus, comprising:
a recording part for recording audio data and/or video data as MPEG data on a recording medium; and
a special reproduction part for reproducing the MPEG data by modifying a reproduction timing,
wherein the MPEG data comprise predetermined data area, and
by using the data area, the special reproduction part inserts information on the modified reproduction timing into the MPEG data without changing the data size of the MPEG data.

5. The AV data recording/reproducing apparatus according to claim 4, wherein the MPEG data comprise a PES header and the data area is secured in the PES header.

6. The AV data recording/reproducing apparatus according to claim 5, wherein the PES header is added for every picture of video data.

7. The AV data recording/reproducing apparatus according to claim 4, wherein in the MPEG data, the data area is included just in front of a sequence header.

8. The AV data recording/reproducing apparatus according to claim 7, wherein the MPEG data comprise a plurality of contiguous packets and the data area is included in a packet located a predetermined number of packets in front with respect to the packet including the sequence header.

9. An AV data recording apparatus, comprising:
a recording part for recording audio data and/or video data as MPEG data on a recording medium,
wherein when the MPEG data are reproduced by modifying a reproduction timing, a predetermined data area storing information on the modification of the reproduction timing is included.

10. An AV data reproducing apparatus, comprising:
a special reproduction part for reproducing MPEG data of audio data and video data by modifying a reproduction timing;
wherein the MPEG data comprise a predetermined data area, and
by using the data area, the special reproduction part inserts information on the modified reproduction timing into the MPEG data without changing the data size of the MPEG data.

11. An AV data reproducing apparatus, comprising:
a special reproduction part for reproducing MPEG data of audio data and/or video data, which comprise a plurality of contiguous packets, recorded on a recording medium by modifying a reproduction timing;
wherein the special reproduction part inserts information on one of the modified reproduction timings into a predetermined packet, and the MPEG data of the data size of the information for controlling the reproduction timing are stored in another transport packet that is newly inserted.

12. The AV data recording apparatus according to claim 11, wherein the packet has a fixed data length comprising a transport packet, and
the information on the reproduction timing is stored in the PES header included in the transport packet.

13. The AV data reproducing apparatus according to claim 12, wherein the PES header is added for every picture of video data.

14. The AV data reproducing apparatus according to claim 12, wherein the PES header is added for every audio frame of audio data.

15. A method for recording and reproducing AV data, the method comprising:
recording video data as MPEG data including a PES header on a recording medium; and
reproducing the MPEG data by modifying a reproduction timing,
wherein the PES header comprises a stuffing data area that is an empty data area; and
in reproducing, by using the stuffing data area, information for controlling the modified reproduction timing is inserted into the PES header without changing the size of the PES header.

16. A method for recording and reproducing AV data, the method comprising:
reproducing the MPEG data including a PES header recorded in a recording medium by modifying a reproduction timing;
wherein in reproduction, information for controlling one of the modified reproduction timings is inserted into the PES header, and the MPEG data of the data size of the information for controlling the reproduction timing is stored in another transport packet that is newly inserted.

17. A method for recording and reproducing AV data, the method comprising:
recording audio data and/or video data as MPEG data on a recording medium; and
outputting the MPEG data by adding predetermined information to the MPEG data,
wherein the MPEG data includes a predetermined data area, and
in outputting the MPEG data by adding predetermined information, by using the data area, predetermined information is inserted into the MPEG data without changing the size of the MPEG data.

18. A method for recording and reproducing AV data, the method comprising:
recording audio data and/or video data as MPEG data on a recording medium; and
reproducing the MPEG data by modifying the reproduction timing,
wherein the MPEG data comprise a predetermined data area; and
in reproducing, by using the data area, information on the modified reproduction timing is inserted into the MPEG data without changing the data size of the MPEG data.

19. A method for recording AV data, the method comprising:
recording audio data and/or video data as MPEG data on a recording medium,
wherein in reproducing the MPEG data by modifying a reproduction timing, a predetermined data area for storing information on the modification of the reproduction timing.

20. A method for reproducing AV data, the method comprising:
reproducing audio data and/or video data as MPEG data by modifying the reproduction timing,
wherein the MPEG data comprise a predetermined data area; and
in reproduction, by using the predetermined data area, information on the modified reproduction timing is inserted into the MPEG data without changing the data size of the MPEG data.

21. A method for reproducing AV data, the method comprising:
reproducing MPEG data including audio data and/or video data, which comprise a plurality of contiguous packets, recorded on a recording medium,
wherein in reproduction, information on one of the modified reproduction timings is inserted into a predetermined packet, and the MPEG data of the data size of the information for controlling the reproduction timing are stored in another transport packet that is newly inserted.

22. A data structure body, comprising MPEG data of audio data and/or video data, wherein the MPEG data comprise in advance a predetermined data area that can be used for storing information on the modification of a reproduction timing.

23. The data structure body according to claim 22, wherein the data area is secured in the PES header.

24. The data structure body according to claim 22, wherein the PES header is added for every picture of video data.

25. The data structure body according to claim 22, wherein the MPEG data comprise packets; and the data area is included in a packet located a predetermined number of packets in front with respect to a packet including a sequence header.

26. A data structure body, comprising audio data and/or video data as MPEG data, wherein the MPEG data have a PES header in the unit of a picture of the video data, and the PES header comprises a stuffing byte.

27. A recording medium recorded by the AV data recording/reproducing apparatus according to any one of claims 1 to 8.

28. A recording medium recorded by the AV data recording apparatus according to claim 9.

29. A recording medium recorded by a method for recording and reproducing AV data according to any one of claims 15 to 18.

30. A recording medium recorded by a method for recording AV data according claim 19.
